# NEUE EUROPÄISCHE PATENTSCHRIFT

(11) **EP 0 403 041 B2**
(45) Veröffentlichungstag und Bekanntmachung des Hinweises auf die Entscheidung über den Einspruch: **21.03.2001**
(45) Hinweis auf die Patenterteilung: 31.08.1994
(21) Anmeldenummer: 90250147.7
(22) Anmeldetag: 06.06.1990
(51) Int. Cl.: B29C 45/82

(54) **Spritzgiessmaschine mit hydraulischen Verbrauchern**
Injection moulding machine with hydraulic actuators
Machine à mouler par injection avec des actionneurs hydrauliques

(30) Priorität: 14.06.1989 DE 3919823
(43) Veröffentlichungstag der Anmeldung: 19.12.1990
(73) Patentinhaber: MANNESMANN Aktiengesellschaft, 40027 Düsseldorf (DE)
(72) Erfinder: Würl, Ernst, D-8831 Höttingen (DE); Schreiner, Helmut, Dipl.-Ing., D-8500 Nürnberg 10 (DE)
(74) Vertreter: Meissner, Peter E., Dipl.-Ing.

(56) Entgegenhaltungen:
- DE-A- 1 601 732
- DE-A- 1 750 707
- DE-A- 2 263 797
- DE-A- 3 524 310
- DE-C- 821 422
- DE-C- 823 557
- FR-A- 1 518 913
- US-A- 3 509 600
- Prospekte: Lenze Antriebstechnik, "Servo-Antriebe und Positioniersteuerungen", "Servotechnik von Lenze", "AC-Servomotoren Serie AS", April 1988
- Plastics World, February 1986, Seite 15, "IMM power use cut by 70%"
- Ölhydraulik und Pneumatik, Heft Nr. 3, März 1989, Seiten 197-208: "Antreiben mit geregelten Zylinderantrieben"
- Fischer Rolf, Elektrische Maschinen, 1983, Carl Hanser Verlag, München, Wien, Seiten 223-227, 294

## Beschreibung

Die Erfindung betriff eine Spritzgießmaschine zur Herstellung von Formteilen aus Kunststoff mit hydraulischen Verbrauchern für einzelne Baugruppen, insbesondere Schließeinheit, Spritzeinheit, Auswerfer und Kerne, wobei die hydraulischen Verbraucher Im geschlossenen Hydrauliksystem ohne Zwischenschaltung von hydraulischen Steuerungselementen mit Pumpen verbunden sind, die von Wechselstrom-Servomotoren angetrieben werden, welche regelungstechnisch mit den einzelnen Baugrupppen in Verbindung stehen, wobei an den Baugruppen Elemente zum Messen der Regelgrößen, nämlich der Position (x) oder der Kraft (P) vorgesehen sind.

Eine derartige Spritzgießmaschine bzw. ein entsprechendes Regelverfahren ist aus der DE-A-1750 707 bekannt.

Aus EP-02 01 610 A1 ist eine Spritzgießmaschine bekannt, bei der ein Servomotor eine Kniehebelschließeinheit antreibt. Der Motor wirkt hierbei über eine Kette auf die Mutter einer Kugelspindel.

Bei dieser Bauart wird mechanisch durch Rotation eine Linearbewegung erzeugt, mit dem Nachteil nicht vermeidbaren Verschleißes der mechanischen Elemente. Darüber hinaus ist die Drehzahl der Antriebseinheit zur Vermeidung der Zerstörung des Kugelspindelsystems und zur Verhinderung hoher Laufgeräusche begrenzt.

Aus DE-AS 15 29 933 ist eine Spritzgießmaschine mit hydraulischen Verbrauchern einzelner Baugruppen bekannt. Die Hydraulikanlagen solcher Maschinen weisen üblicherweise eine zentrale Druckerzeugungsstation auf, bei der ein Elektromotor eine Konstantpumpe oder eine Pumpe mit veränderbarer Fördermenge antreibt und die Druck-und Volumensteuerung des Hydrauliksystems über Ventile bewirkt wird.

Neben der Geräuschbelastung durch den Dauerbetrieb von Motor und Pumpe weisen derartige Antriebe von Spritzgießmaschinen den Nachteil hohen Energieverbrauchs auf. Darüber hinaus ist das Regelverhalten dieser hydraulisch getriebenen Spritzgießmaschinen auch beim Einsatz von Servoventilen und Regelpumpen relativ träge.

Aus der DE-A-2263797 ist eine Spritzgießmaschine bekannt, bei der ein drehzahlveränderlicher Gleichstrommotor vorgesehen ist, der die Hydraulikpumpen betreibt. Der Hydraulikkreislauf ist offen und weist Ventile auf.

Eine Spritzgießmaschine zur Herstellung von Formteilen aus Kunststoff mit hydraulischen Verbrauchern für einzelne Baugruppen, ist aus "Plastics world" (Febr. 1986, Seite 15) bekannt. Hierbei sind die hydraulischen Verbraucher mit Pumpen verbunden, die von Wechselstrommotoren angetrieben werden. Einzelheiten der Regelung sind hieraus nicht bekannt.

Aus der US-A-3509600 ist ein Antrieb für eine Spritzgießmaschine bekannt, mit ständig laufendem Motor als Pumpenantrieb und einer Ventilsteuerung.

Schließlich ist aus "Antreiben mit geregelten Zylinderantrieben" (Ölhydraulik und Pneumatik, 33, 1989, Nr. 3, Seiten 197 - 208) eine Verdrängungssteuerung mit drehzahl- und drehrichtungsgeregeltem Elektromotor des Pumpenantriebs bekannt.

Aufgabe der Erfindung ist es, hydraulische Antriebe und eine Regelung dieser Antriebe bei Spritzgießmaschinen zu schaffen, die bei kompakter Bauweise leistungsstark, schnell und dabei geräuschgemindert sowie energiearm die einzelnen Baugruppen bewegen.

Die Erfindung löst diese Aufgabe durch die Merkmale des Anspruchs 1.

Die einzelnen Verbraucher sind unmittelbar mit einer durch einen Servomotor getriebene Pumpe verbunden. Es wird ein einheitliches Antriebskonzept verwirklicht, da die Antriebe aller Baugruppen, unabhängig ob sie eine Haupt- oder Nebenfunktion erfüllen, hydraulisch getrieben werden.

Die zum Antreiben der hydraulischen Verbraucher erforderliche Energie wird nur bei Bedarf erzeugt, da der Servomotor im sogenannten Stop-and-Go-Betrieb arbeiten kann. Die durch die Pumpen erzeugte Arbeitsenergie wird in einfacher Weise durch Rohrleitungen ohne Zwischenschaltung von hydraulischen Steuerungselementen wie Wege- oder Überstromventile unmittelbar den Verbrauchern zugeführt und in lineare Bewegung umgesetzt.

Ein Einbau dieser Antriebe ist ohne besonderen Aufwand in bestehende Antriebssystem möglich.

Der im geschlossenen Hydrauliksystem erforderliche Vorspanndruck kann in baulich einfacher Weise durch Druckhaltepumpen oder durch standardisierte Speicher aufrechterhalten werden. Die Kraftübertragung von Erzeuger zum Verbraucher erfolgt mit extrem hoher Geschwindigkeit und ist nicht durch mechanische Elemente begrenzt. Die Folge ist ein im Vergleich zur elektrisch-mechanischen Spritzgießmaschinen deutlich kürzere Zykluszeit.

Das Hydrauliksystem ist quasi verschleißfrei. Die zum Einsatz kommenden mechanischen Elemente weisen durch das Medium Öl eine Eigenschmierung auf. Darüber hinaus sind Hydrauliksysteme im Vergleich zum mechanischen System nicht so stark, so daß extreme Belastungsspitzen vermieden werden. Trotzdem weisen diese Hydrauliksysteme eine hohe Steifigkeit auf, die reproduzierbare Werte bezüglich des Weges oder der Kraft ermöglichen. Verstärkt wird dieser Vorteil noch durch die unmittelbare Leistungsübertragung in dem geschlossenen Hydraulikkreis, also ohne störende Zwischenschaltung von Ventilen und ähnlichern.

Die Anzahl der für die Verbraucher der Spritzgießmaschine erforderlichen Bauelemente kann in vorteilhafter Weise verringert oder bei gleicher Anzahl durch einfachere Elemente ersetzt werden. So kann ein Servomotor inklusive Subregelkreis ersetzt werden durch einfach schaltbare Kupplungen, die zwischen Motor und Pumpe angeordnet sind. Der Vorteil der an die Baugruppe angepaßte Pumpengröße bleibt dabei erhalten.

Statt der schaltbaren Kupplungen können in einer weiteren vorteilhaften Anordnung an einem Servomotor mehr als eine Pumpe angeschlossen werden. Durch den Einsatz von Verstellpumpen können die Volumenströme der Verbraucher der einzelnen Baugruppen sowohl Volumen- wie rich-tungsmäßig frei eingestellt werden. Das Steuerungssystem dieser standardisierten Verstellpumpen ist einfach ausgeführt und ordnet sich dem Regelsystem der Servomotoren unter.

Die hohe Dynamik, die die Hydraulik systembedingt aufweist, wird noch durch das Verfahren bei der Regelung der erfindungsgemäßen Spritzgießmaschine unterstützt. In einem Subsystem, nämlich einem Positions- oder einem Kraftregelkreis, werden die an der jeweiligen Baugruppe ermittelten Meßwerte geregelt und in einen Geschwindigkeitswert umgewandelt. Im Regelkreis des Antriebsmotors wird dieser Geschwindigkeitswert als Sollwert benutzt und unmittelbar mit der Ist-Drehgeschwindigkeit der Pumpenwelle verglichen und bei Abweichungen durch ein Servoventilmodul geregelt.

Dieses Regelverfahren ermöglicht ein schnelles analoges Reagieren auf Änderungen des Istverhaltens der Baugruppen.

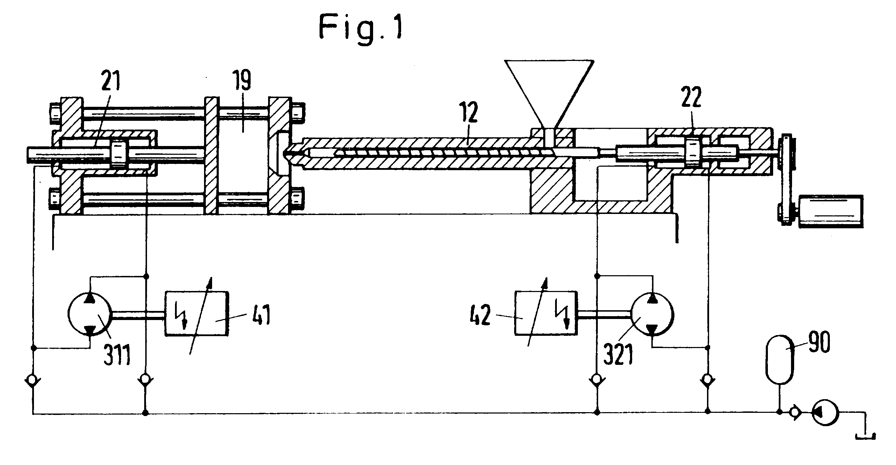

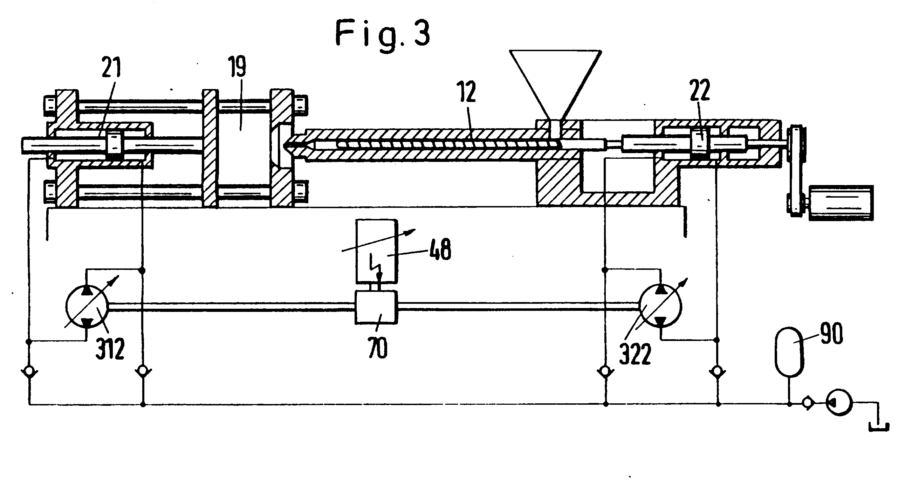

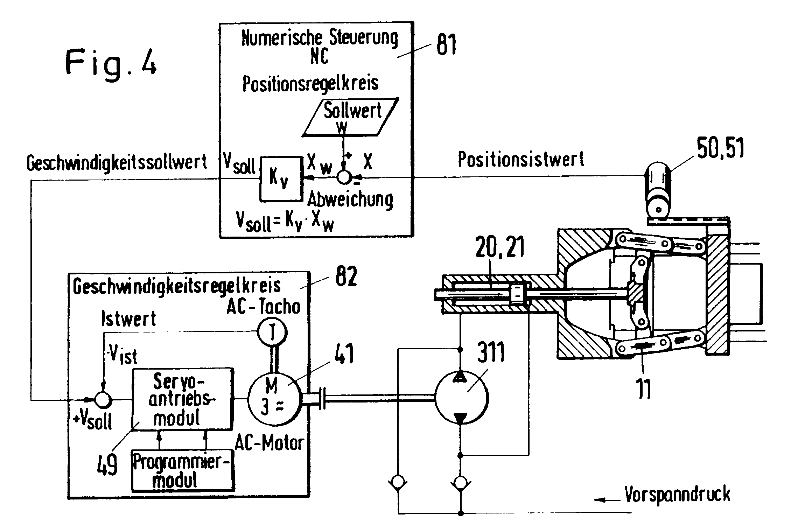

Beispiele der Erfindung sind in den Figuren 1 bis 4 aufgezeigt.

Die Figuren 1 bis 3 zeigen eine Spritzeinheit 12 sowie eine Schließeinheit 19 mit den zugehörigen hydraulischen Verbrauchern, den Kolben/Zylindereinheiten 21, 22. An das geschlossene Hydrauliksystem ist ein Druckspeicher 90 angeschlossen.

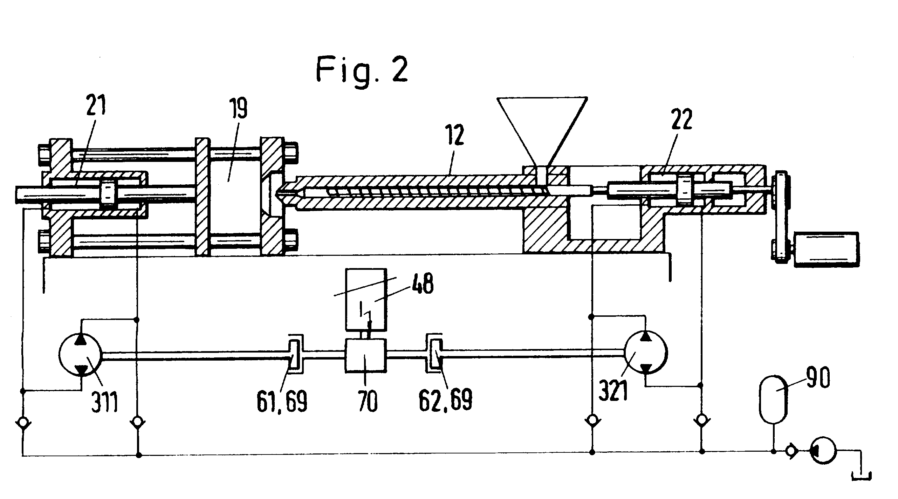

In den Figuren 1 und 2 sind die hydraulischen Verbraucher 21, 22 kraftmäßig mit den Konstantpumpen 311 und 321 verbunden.

In der Figur 1 sind die Konstantpumpen 311 und 321 unabhängig voneinander mit Motoren 41 und 42 verbunden.

In der Figur 2 sind die Konstantpumpen 311 und 321 über die Kupplungen 61 und 62 und ein Verteilergetriebe 70 mit dem Motor 48 verbunden. Die Kupplungen 61, 62 sind durch die Kupplungssteuerung 69 von außen schaltbar.

In der Figur 3 ist ein Motor 48 vorgesehen, der über das Verteilergetriebe 70 mit Verstellpumpen 312 und 322 verbunden ist.

Die Figur 4 zeigt die Konstantpumpe 311, die mit einem hydraulischen Verbraucher 20, nämlich der Kolben/Zylindereinheit 21 verbunden ist, die die als Kniehebel 11 ausgebildete Schließenheit bewegt. Die Position der Schließeinheit 11 wird durch Meßelemente 50, nämlich dem Positionsauf-nehmer 51 erfaßt.

Der Positionswert x wird nach der Erfassung dem Positionsregelkreis 81 zugeführt, mit einem Sollwert w verglichen und als Geschwindigkeitswert v ausgegeben. Dieser Wert v wird als Geschwindigkeitssollwert einem Geschwindigkeitsregelkreis 82 zugeführt und mit der aktuellen Drehgeschwindigkeit des Motors 41 verglichen und bei Abweichung mittels eines Servoantriebmoduls 49 geregelt.

## Patentansprüche

1. Spritzgießmaschine zur Herstellung von Formteilen aus Kunststoff mit hydraulischen Verbrauchern (20, 21, 22) für einzelne Baugruppen (11, 12),
insbesondere Schließeinheit, Spritzeinheit, Auswerfer und Kerne,
wobei die hydraulischen Verbraucher im geschlossenen Hydrauliksystem ohne Zwischenschaltung von hydraulischen Steuerungselementen mit Pumpen (31, 32) verbunden sind, die von Wechselstrom-Servomotoren (41, 42, 48) angetrieben werden, welche regelungstechnisch mit den einzelnen Baugrupppen (11, 12) in Verbindung stehen, wobei an den Baugruppen (11, 12) Elemente (50, 51) zum Messen der Regelgrößen, nämlich der Position (x) oder der Kraft (P) vorgesehen sind, und wobei
- an den jeweiligen Baugruppen der Meßwert (Position (x) oder Kraft (P) ) erfaßt
- dieser Meßwert in einem Positions- bzw. Kraftregelkreis mit einem Sollwert (w) verglichen
- eine dabei ermittelte Abweichung in einen Geschwindigkeitswert (v) umgewandelt und als Geschwindigkeits-Soll-Wert einem Geschwindigkeitsregelkreis zugeführt, und
- nach Vergleich des Geschwindigkeits-Soll-Wertes mit der Ist-Geschwindigkeit des Motors über ein Servoantriebsmodul die Drehgeschwindigkeit des Motors eingestellt wird.

2. Spritzgießmaschine mit Anspruch 1,
dadurch gekennzeichnet,
dass mindestens zwei Pumpen (312, 322) mit einem Wechselstrom-Servomotor (48) verbunden sind.

3. Spritzgießmaschine nach Anspruch 2,
dadurch gekennzeichnet,
dass die Wechselstrom-Servomotoren (41, 42, 48) frequenzmoduliert sind und
dass an ihnen ein Verteilergetriebe (70) angeordnet ist, das mit mindestens zwei Pumpen (312, 322) verbunden ist.

## Claims

1. An injection-moulding machine for the production of shaped parts from plastics material with hydraulic consumers (20, 21, 22) for individual assemblies (11, 12), in particular closing unit, injection unit, ejector and cores,
in which the hydraulic consumers are connected to pumps (31, 32) in a closed hydraulic system without the interposition of hydraulic control elements, which pumps are driven by alternating-current servo motors (41, 42, 48) which are in a control connection with the individual assemblies (11, 12), with elements (50, 51) for measuring the regulating variables, namely the position (x) or the power (P), being provided on the assemblies (11, 12), and wherein
- the measured value (position (x) or power (P)) is detected on the respective assemblies,
- this measured value is compared with a desired value (w) in a position or power control circuit respectively,
- a deviation determined thereby is converted into a speed value (v) and is fed to a speed control circuit as a desired speed value, and
- after the comparison of the actual speed of the motor with the desired speed value the speed of rotation of the motor is set via a servo drive module.

2. An injection-moulding machine according to Claim 1, characterised in that at least two pumps (312, 322) are connected to an alternating-current servo motor (48).

3. An injection-moulding machine according to Claim 2, characterised in that the alternating-current servo motors (41, 42, 48) are frequency-modulated and that a power take-off gear (70) is located thereon, which gear is connected to at least two pumps (312, 322).

## Revendications

1. Machine de coulée par injection pour fabriquer des pièces en matière synthétique, comportant des utilisateurs hydrauliques (20, 21, 22) pour des sous-ensembles individuels (11, 12), en particulier une unité de fermeture, une unité d'injection, des éjecteurs et des noyaux, les utilisateurs hydrauliques, dans le système hydraulique fermé, étant reliés à des pompes (31, 32) sans interposition d'éléments hydrauliques de commande, pompes qui sont entraînées par des servomoteurs (41, 42, 48) à courant alternatif, lesquels sont reliés aux sous-ensembles individuels (11, 12) par un asservissement, sur les sous-ensembles (11, 12), des éléments (50, 51) étant prévus pour mesurer les grandeurs de réglage, c'est-à-dire la position (x) ou la force (P), et
- sur les sous-ensembles respectifs, la valeur de mesure [position (x) ou force (P)] est détectée,
- cette valeur de mesure est comparée dans un circuit de réglage de force ou de position à une valeur de consigne (W),
- un écart de plus détecté est transformé en une valeur de vitesse (v) et, en tant que valeur de consigne de vitesse, est amené à un circuit de réglage de vitesse, et
- après comparaison de la valeur de consigne de vitesse avec la vitesse réelle du moteur, la vitesse de rotation du moteur est réglée par l'intermédiaire d'un module de servocommande.

2. Machine de coulée par injection selon la revendication 1, caractérisée en ce qu'au moins deux pompes (312, 322) sont reliées à un servomoteur (48) à courant alternatif.

3. Machine de coulée par injection selon la revendication 2, caractérisée en ce que les servomoteurs (41, 42, 48) à courant alternatif sont modulés en fréquence, et en ce que, sur ceux-ci, il est agencé une transmission de distribution (70) qui est reliée à au moins deux pompes (312, 322).
